# EUROPEAN PATENT SPECIFICATION

(11) **EP 2 142 376 B1**
(45) Date of publication and mention of the grant of the patent: **20.11.2013**
(21) Application number: 08749524.8
(22) Date of filing: 07.04.2008
(51) Int. Cl.: B41J 3/407

(54) **TAPE PRINTING APPARATUS AND METHOD WITH DISPLAYING FEATURES**
BANDDRUCKER UND VERFAHREN MIT FUNKTIONSANZEIGE
APPAREIL D'IMPRESSION SUR BANDE

(30) Priority: 05.04.2007 GB 0706788
(43) Date of publication of application: 13.01.2010
(73) Proprietor: DYMO, 9100 Sint-Niklaas (BE)
(72) Inventor: VAN POTTELBERGHE, Peter, B-9111 Belsele (BE); DULLAERT, Jimmy, B-9190 Stekene (BE); VLEURINCK, Jos, B-9340 Oordegem (BE)
(74) Representative: Style, Kelda Camilla Karen
(86) International application number: PCT/EP2008/054180
(87) International publication number: WO 2008/122635

(56) References cited:
- EP-A- 0 650 841
- EP-A- 0 783 156
- EP-A- 0 855 282
- EP-A- 1 120 263
- EP-A- 1 201 444
- EP-A- 1 362 705
- EP-A- 1 527 890
- EP-A1- 1 435 579
- EP-A2- 0 600 593
- EP-A2- 0 816 105
- WO-A-03/053703
- DE-U1- 29 602 534
- JP-A- 2004 230 610
- US-A- 5 813 021
- US-A- 5 873 110
- US-A1- 2003 110 441
- US-A1- 2005 002 715
- US-A1- 2005 007 606
- US-A1- 2005 073 720
- US-A1- 2006 193 669
- US-A1- 2007 013 950

## Description

The present invention relates to a tape printing apparatus.

Tape printing apparatus are known in for example EP-A-322918 (Brother Kogyo Kabushiki Kaisha) and EP-A-267890 (Varitronics). The known tape printing apparatus comprise a cassette receiving bay for receiving a cassette or tape holding case. In EP-A-267890, the tape holding case houses an ink ribbon and a substrate tape, the latter comprising an upper image receiving layer secured to a backing layer by an adhesive. In EP-A-322918, the tape holding case houses an ink ribbon, a transparent image receiving tape and a double-sided adhesive tape which is secured at one of its adhesive coated sides to the image tape after printing and which has a backing layer peelable from its other adhesive coated side. With this tape printing apparatus, the image transfer medium (ink ribbon) and the image receiving tape (substrate) are in the same cassette.

It has also been proposed by the present applicant in, for example EP-A-578372 to house the ink ribbon and the substrate tape in separate cassettes.

In all of these cases, the image receiving tape passes in overlap with an ink ribbon to a printing zone consisting of a print head and a platen which cooperate to cause an image to transfer from the ink ribbon to the image receiving tape. There are many ways in doing this, including dry lettering or dry film impression but the most usual way currently is by thermal printing where the print head is heated and the heat causes ink from the ink ribbon to be transferred to the image receiving tape.

It is also known for the ink ribbon to be omitted and an image to be printed directly on the image receiving tape by heating the print head. This process is called direct thermal printing.

The known label printers have displays. Generally, it is known to have attribute indicators arranged to one side of the screen or around the edge thereof to indicate various modes. For example, the indicator can indicate if the text is normal, bold or italics. A frame mode can be indicated or the like. However, where the tape printing apparatus has a number of different modes of operations, it can be difficult for a user to determine that mode easily, even if an attribute area is provided since the indications provided in that attribute area tend to be small and tend to include a number of different attributes.

Where a label has a fixed length, some known label tape printing apparatus will not allow the user to input additional characters or will only provide an error message when the user activates the print key. This can be frustrating for the user.

EP0783156 discloses a printing apparatus and method for printing onto a seal. This document deals with how to print on to a seal face member which may be of limited dimensions in the longitudinal and transverse directions.

According to a further aspect of the present invention, there is provided a tape printing apparatus comprising input means, a display, a processor arranged to control said display in response to an input received by said input means, said input means being arranged to permit a user to define a label having a predetermined length dimension and a size of text for an image to be printed, said processor being arranged to determine if the size of the image to be printed can be accommodated in said predetermined length dimension and to cause the display to display a part of the image to be printed which cannot be accommodated in said predetermined length dimension in a different way to that part of the image which can be accommodated in said predetermined length dimension.

According to another aspect of the present invention, there is provided a method of operating a tape printing apparatus as set forth above comprising the steps of receiving an input defining a label having a predetermined length dimension and a size of text for an image to be printed; determining if the size of the image to be printed can be accommodated in said predetermined length dimension; and causing a display to display a part of the image which cannot be accommodated in said predetermined length dimension in a different way to that part of the image which can be accommodated in said predetermined length dimension.

According to another aspect there is provided a computer program or a computer program product carrying a computer program arranged when executed in a tape printing apparatus as set forth above to perform the steps of the method described above.

For a better understanding of the present invention and as to how the same may be carried into effect, reference will now be made by way of example only to the accompanying drawings in which:
Figure 1 shows a tape printing apparatus embodying the present invention;
Figure 2 shows control circuitry for controlling the tape printing apparatus embodying the present invention;
Figure 3 diagrammatically shows a cassette in the cassette receiving bay of the tape printing apparatus of Figure 1;
Figure 4 shows an image displayed by the display of the tape printing apparatus of Figure 1, when in a patch panel mode;
Figure 5 shows a first and a second label printed in a patch panel mode;
Figure 6 shows the image displayed when a symbol key of the tape printing apparatus of Figure 1 is actuated;
Figure 7 shows the image displayed when a given group of symbols is selected;
Figure 8 shows a warning displayed by the display;
Figure 9 shows the bar code menu;
Figure 10 shows the bar code mode;
Figure 11 shows a message displayed during printing;
Figure 12 illustrates the display, when the user is in the flag mode;
Figure 13 shows the display for selecting text size;
Figure 14 shows the display when in the fixed length mode;
Figure 15 shows a general edit mode where a plurality of lines has been entered;
Figure 16 shows a patch panel mode in which more characters than can be accommodated in a particular area have been input;
Figure 17 shows the attribute area of the display in more detail;
Figure 18 illustrates the serialisation mode;
Figure 19 illustrates the display when in a vertical mode showing one label;
Figure 20 illustrates the display when in a vertical mode showing a separation between two labels;
Figure 21 illustrates labels produced in the serialisation mode;
Figure 22 indicates labels produced in the vertical mode;
Figures 23a and b illustrate the display when displaying two different portions of the same label.

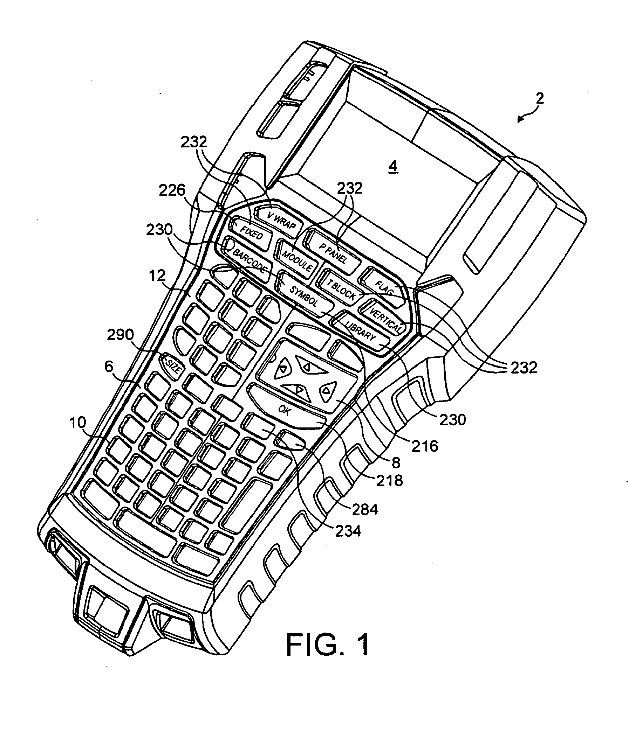

Figure 1 shows the front of a tape printing apparatus 2. The printing apparatus has a display 4. In preferred embodiments of the present invention, the display 4 is a liquid crystal display. The tape printing apparatus has a keyboard 6. The keyboard 6 has a plurality (in this case four) cursor control keys 8. Also provided are a plurality of keys 10 for selecting characters and a plurality of keys 12 for selecting numbers. The keyboard 6 also has two sets of function keys 14. It should be appreciated that the number of keys provided and the functions provided by those keys can be varied in accordance with the application of the printer. For example, in one embodiment the individual keys for the numbers can be omitted and instead the number keys may be accessed via character keys. Another modification avoids the requirement for a single key for each character. Alternatively, functions may be accessed by use for example of a shift key.

The keyboard 6 thus allows the user to input an image including characters, number and/or symbols. The function keys allow the attribute of the labels to be selected. The function keys 14 thus allow different functions to be implemented and may control the operational mode of the tape printing apparatus.

In one alternative embodiment of the present invention, the keyboard can be replaced a touch-pad, a touch-screen or any other input means.

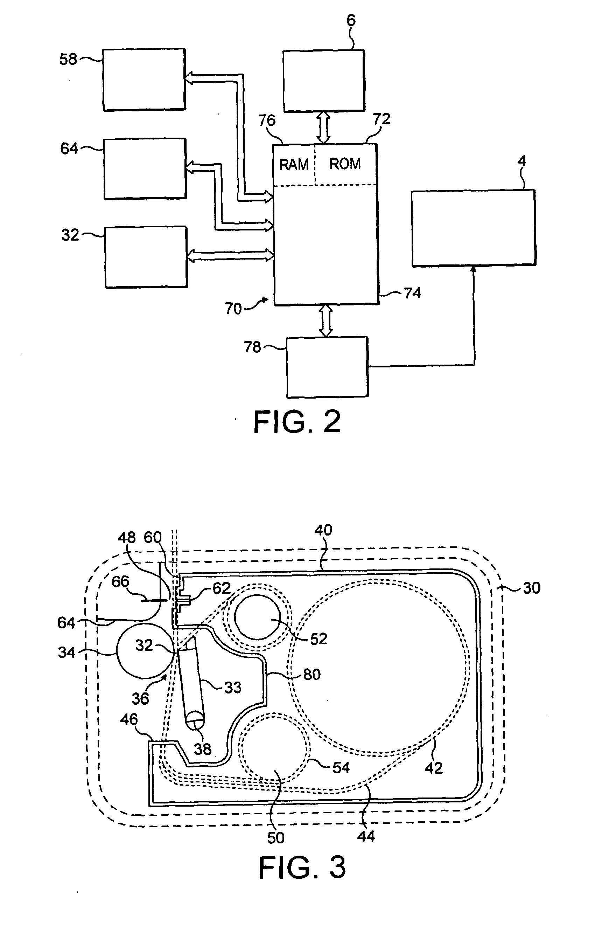

Reference is made to Figure 3 which shows a cassette receiving bay which is indicated by the dotted line 30. The cassette bay 30 includes a thermal print head 32 and a rotatable platen 34 which cooperate to define a print zone 36. The cassette receiving bay is covered by a lid. The cassette receiving bay is accessed via the rear side of the printing apparatus.

The thermal print head 32 comprises a column of printing elements. The print head 32 has a height which is generally large enough to print on the widest width of tape. The print head 32 has a width which is equal to the width of one printing element. Each of the printing elements is activatable separately and is activated in accordance with the desired image to be printed. An image can be printed with the width of characters extending along the tape or with the height of the characters extending along the length of tape in the so-called vertical printing mode.

The print head 32 is pivotable about a pivot point 38 to enable the cassette to be removed and replaced in the cassette bay. A cassette inserted in the cassette bay 30 is noted generally by reference number 40. The cassette 40 holds a supply spool 42 of an image receiving tape 44. The image receiving tape 44 is guided by a guide mechanism (not shown) through the cassette 40, out of the cassette 40 through an outlet 46, past the print zone 36 to a cutting location 48.

The same cassette 40 has an ink ribbon supply spool 50 and an ink tape up spool 52. The ink ribbon 54 is guided from the ink ribbon supply spool 50 through the print zone 36 and taken up on the ink ribbon tape up spool 52. The image receiving tape 44 thus passes in overlap with the ink ribbon 54 through the print zone 36 with its image receiving layer in contact with the ink ribbon 54.

The cassette 44 has a recess 80 for receiving the print head 32. Guide portions may also be provided (not shown) for guiding the thermal transfer ribbon 54 through the print zone 36. The print head 32 is movable between an operative position in which it is in contact with the platen 34 and holds the thermal transfer ribbon 54 and the image receiving tape 44 in overlap between the print head 32 and the platen 34 and an inoperative position in which it is moved away from the platen 34 to release the ink ribbon 54 and the image receiving tape 44. In the operative position, the platen 34 is rotated to cause the image receiving tape 44 to be driven passed the print head 32 and the print head is controlled to print an image on the image receiving tape 44 by the thermal transfer of ink from the ink ribbon 54.

As shown diagrammatically in Figure 2, the platen is driven by a motor 58. The motor rotates to drive the image receiving tape through the print zone 36 continuously during printing. It is possible that the tape may be driven in a step wise manner by a stepper motor.

An image is printed on the tape fed out from the print zone 36 to the cutting location 48 which is provided at a location in a portion of the wall of the cassette 40 which is close to the print zone 36. The portion of the wall on the cassette 40 where the cutting location 48 is defined is denoted by reference number 60. A slot 62 is defined in the wall portion 60 of the cassette and the image receiving tape 44 is fed past the print zone 36 to the cutting location 48 where it is supported by facing portions on either side of the slot 62.

A cutting mechanism 64 including a cutting blade 66 is provided. The cutting blade 66 cuts the image receiving tape 44 and then enters the slot 62.

Basic circuitry for controlling the tape printing apparatus is shown in Figure 2. There is a microprocessor chip 70 having a non volatile memory 72, a microprocessor 74 and random access memory RAM capacity indicated diagrammatically by RAM 76. The microprocessor chip 70 is connected to receive label data input to it from a data input device such as keyboard 6.

The microprocessor chip 70 outputs data to drive display 4 via a display driver chip 78 to display a label to be printed (or part thereof) and/or other information such as a message for the user. The display driver alternatively may form part of the microprocessor chip. Additionally, the microprocessor chip 70 also outputs data to drive the print head 32 so that the label data is printed on the image receiving tape to form a label. Finally, the microprocessor chip also controls the motor 58 for driving the platen 34. The microprocessor chip may also control the cutting mechanism 64 to allow a length of tape to be cut off. In alternative embodiments of the present invention, at least part of the cutting mechanism may be manually operated.

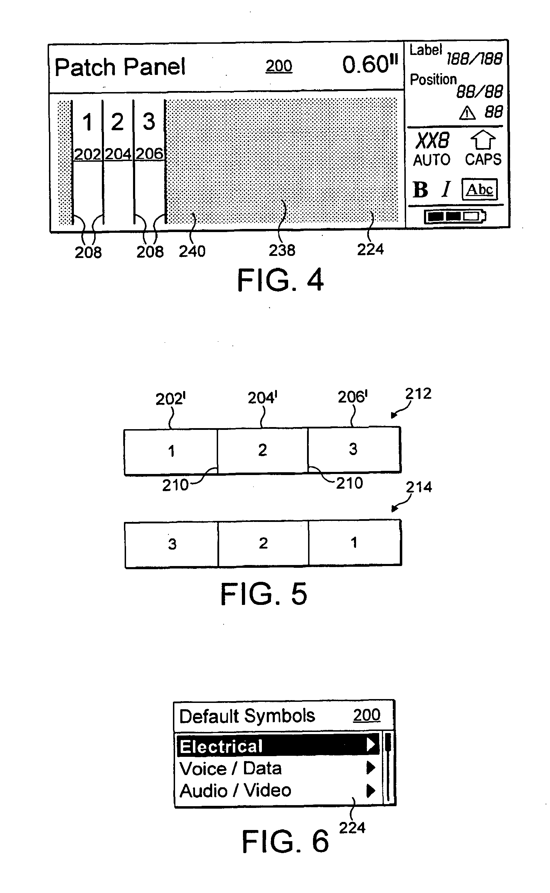

Reference is now made to Figures 4 and 5 which illustrate a so-called "patch panel mode". A patch panel has a plurality of different areas, each of which can be individually labelled. When the patch panel mode is entered, the user is arranged to define the port distance that is the distance between the different areas in a label. In practice, this will define the size of each individual area of a label. In the embodiment illustrated in Figure 4, a port distance of .6 inches has been selected. The second thing that the user needs to select is the number of ports or individual areas to be labelled. In the example shown in Figure 4, three ports or areas are defined.

The information area 200 on the display shown in Figure 4 indicates that the user is in the patch panel mode and also indicates the port distance. This information area 200 is discussed in more detail hereinafter. The area below the information area 200 shows three areas 202, 204, 206 of a label corresponding to the input data of the individual areas in the label. The size of the area displayed will depend on the amount of data input although the size of the corresponding area in the printed label will depend on the size set by the user. The user is able to input characters, data, numbers etc. into each area of the label. The user is able to move from one area to another by using a cursor key 8.

Lines 208 are used to denote a beginning and end of each of the three areas, as illustrated in Figure 4.

As shown in Figure 5, a first label is provided which has three areas 202', 204' and 206' corresponding respectively to areas 202, 204 and 206 with the input image printed thereon. The areas are separated by printed lines 210, in one embodiment of the present invention. In alternative embodiments of the present invention, the lines may be omitted or replaced by any other suitable indication.

It is sometimes desirable to label both the front of an article such as a patch panel as well as the rear. Embodiments of the present invention thus have a mode where a second label 214 is printed to be fixed to the rear of the patch panel. In the label which is attached to the rear of the patch panel, the images are reordered so that when the label is stuck to the rear of the patch panel, the same labelling information is provided on the same port or the like. Thus the first port will be labelled as such when viewed from both the front and the back.

In one embodiment of the present invention, when in the patch panel mode, the first and second labels 212 and 214 are automatically printed. In an alternative embodiment of the present invention, the user is given the option as to whether or not they require the reverse patch panel label.

This embodiment has been described in the context of a patch panel. However it should be appreciated that embodiments of the invention can be used with any application where a single label has a plurality of areas which are used to label the front and back of an article.

The tape printing apparatus has a symbol key 216 which can be seen from Figure 1. Activation of this key causes the menu shown in Figure 6 to be displayed. The information part of the screen 200 has the title default symbols. In other words, this indicates that there are pre-stored symbols. To aid access to these symbols, they are categorised into groups. As shown in Figure 6, three groups, electrical symbols, voice/data symbols and audio/video symbols are shown. However, by scrolling down this list, further options may be available. These further groups of symbols may include one or more of the following symbols: warning symbols, punctuation symbols, bracket symbols, arrow symbols, number symbols, EU electrical symbols, and currency symbols. It should be appreciated that these groups of symbols are by way of example only. Embodiments of the invention may have two or more groups of symbols. These two or more groups may be selected from or include any of the groups of symbols mentioned above or indeed any other suitable group of symbols which may depend on the application for which the tape printing apparatus is intended.

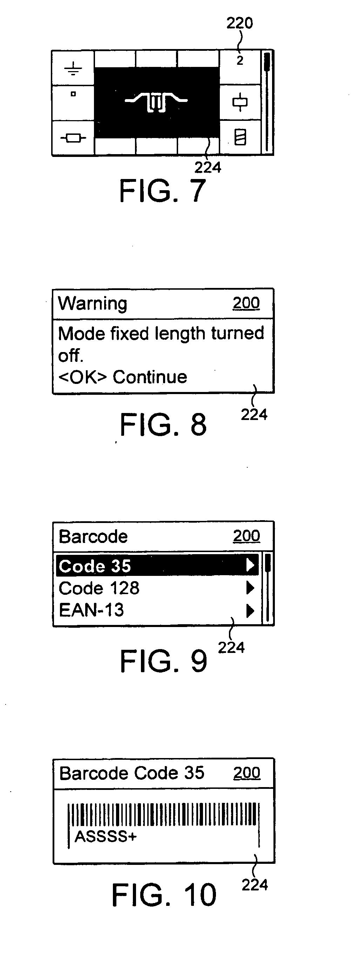

The user is able to scroll between the different symbol groups by using the cursor keys. The user can select a particular group which is highlighted by activating an "OK" key 218 or any other suitable enter or confirmation key. In the example shown in Figure 6, the electrical group of symbols is highlighted. Activation of the confirmation key 218 causes the symbols in that group to be displayed, for example as shown in Figure 7. The user can move between the displayed symbols 220 using the cursor key. When a particular symbol is highlighted by the cursor it may be expanded in size. For example, the symbol 222 in Figure 7 has been highlighted and is very much larger than the other symbols and covers a number of those symbols.

In embodiments of the present invention, as the cursor is moved along, the highlighted symbol appears differently. In particular, the user moves the cursor highlighting different ones of the symbols, using the cursor keys. When the cursor has rested on a particular symbol for a short predetermined time, that symbol is then displayed at a greater magnification compared to the other symbols and over a plurality of those other symbols. After a further predetermined time, the highlighted symbol returns to the same size as the other symbols. The user is able to select the highlighted symbol using for example confirmation key 218

Reference will now be made to Figures 8 to 13 as well as to Figures 4 and 6. The display is arranged to have an information area 200 on the display. This area 200 is arranged above a second area 224. When a particular mode has been selected, the second area is used to display text which is input by the user.

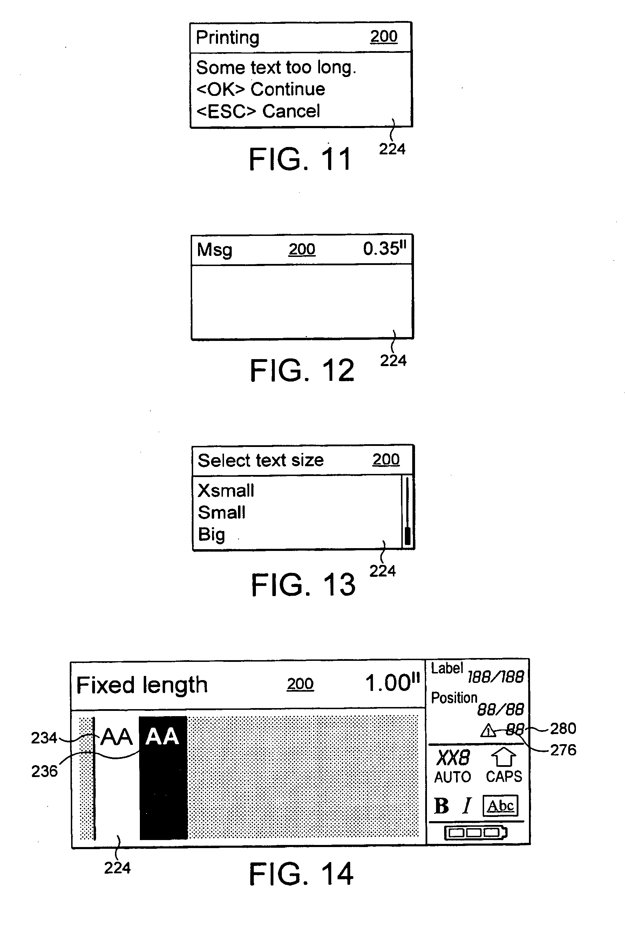

Referring to Figure 12, this shows the display when the so-called "flag mode" has been selected. The information area 200 indicates to the user that the flag mode has been set. In the flag mode, the tape is arranged to be attached to a cable. The two ends of the label are stuck together to provide a so-called flag which extends out from the surface of the cable. When the flag mode is selected, the user is given the option of setting the length of the flag. The information area displays the set size of the flag. In this embodiment, .35 inches has been set as the flag size.

The second area 224 will display the input text or the like or selected symbols to be displayed on that flag.

It should be appreciated that in Figure 4, the information area 200 indicates that the patch mode has been selected and the distance between the port or adjacent areas is point 6 inches. The display area 224 shows the input text for the different areas.

Other modes which require the user to input some parameter include: vertical wrap, patch panel, fixed length, module mode, T-block mode and vertical mode. These keys are referenced 232.

Reference is made to Figure 10. In Figure 10, the information area indicates that the user is in the bar code mode and also indicates the type of bar code which has been selected. The selection of the bar code type is described in more detail later. Thus, in this example, the bar code selected is the code 39.

The second area indicates to the user that a bar code will be printed. The text underneath indicates the text which will be displayed as a bar code.

Thus, one function of the information area 200 is to indicate to the user the mode in which the user is in whilst the second area 224 shows the text or the like of the label to be printed.

The information area can also be used to provide different types of information. For example, Figure 8 shows how a warning can be provided. In particular, the information area indicates that there is a warning. The second part of the display indicates the nature of that warning. For example, a fixed length mode is selected by activating a key 226. A single activation of this key causes the fixed length mode to be entered. A further activation of that key causes the fixed length mode to be exited. When the fixed length key is activated a second time, the warning shown in Figure 8 is displayed. For example, a user may be editing a label and has forgotten that the fixed length mode has been entered. Accordingly, this warning is displayed to remind the user that the further activation of the fixed mode key has caused that mode to be switched off. The second part of the display also includes an instruction to the user requiring the user to activate the confirmation key 218 in order to continue. Thus, the second area may contain the nature of the warning and optionally any instructions for continued usage of the label printer.

It should be appreciated that this is by way of example only and other explanations for the appearance of a warning in the information area 200 may be included. Optional instructions for the continued usage of the label printer may be provided.

The information area 200 may also include information as to the activity of the printer. For example, in Figure 11, the information area indicates the tape is being printed. If there is any error or potential problem with this, the second area may include some further information. For example, in a fixed length mode, some text may be too long to be included in the fixed length. The user is given the option of continuing printing or cancelling the printing and an indication as to how those two operations can be achieved.

Some further examples of warnings / help messages included in the information area and explanations included in the second display are listed below for the example of barcodes.

| **Description** | **Message in information area** | **Information in second area** |
|---|---|---|
| Message Barcode incomplete | Barcode | Barcode(s) incomplete. |
| Message Barcode not allowed | Barcode | Barcode not allowed. |
| Message Barcode Edit | Barcode | Do you want to edit your barcode? |

Reference is made to Figure 9. In Figure 9, the information area 200 indicates which menu has been selected. In the example shown in Figure 9, the bar code menu has been selected. The second area 224 then displays the available bar code types i.e. the options available in that menu.

In this regard, reference is made to Figure 6 which shows in the information area that the symbol menu has been selected whilst the second area 224 shows the different menu options - that is the different symbol groups.

In one embodiment of the present invention, there may be three different types of menu: bar code this allows the type of bar code to be selected, symbol this allows one of a group of symbols to be selected and subsequently an individual symbol in a selected group of symbols to be selected. The third menu is library. This gives the user a selection of categories. Each category comprises a group of words. One of those words can be selected. Accordingly, the groups comprise location, audio-video, voice-data, security, my library (for user selected words). In this latter option, the words hot keys may be displayed in the information area. The keys for selecting these modes are indicated by reference number 230.

Reference is now made to Figure 13. The user has activated a key 234 to get to a setting menu. One of the options on that menu is text size which has been selected using the cursor keys and the confirmation key as set out above. The information area in 200 is used to instruct the user to select the text size. The user then selects one of the text sizes that are displayed in the area 224. This is done as set out previously.

In summary, the information area can do the following: when the user is in an edit mode i.e. inputting text to be printed on a label, display what that mode is, for example, vertical wrap, patch panel mode, flag mode, fixed length mode, module mode, T-block mode or vertical mode. If any parameter has been selected for one of those modes, that may also be displayed in the information area.

The information area may be used to indicate that there is a warning with information about the warning included in the second area of the display and/or action required by the user.

The information area can indicate the current status of the printer, for example whether it is printing and any problem or relevant information associated with the current activity of the printer.

The information area can be used to instruct a user when a label or character attribute is being set. The information area can include information about bar codes, symbols or words to be used inserted or used in a label.

In one embodiment of the invention, the user can select whether or not to have the information area 200. For example the user can select via the settings menu whether or not to have the information area present. If that information area is not present, at least one extra line will be provided in the second area 224, particularly when in the edit mode.

It should be appreciated that in some embodiments, the label printer is arranged to determine if a condition occurs and in response to that condition to automatically display the information area. For example, the information area may be automatically displayed if a warning or error condition has been detected.

The information area may appear when a warning condition occurs but may not be displayed either when the user makes a change such that the warning condition no longer applies or the user interacts with the second area 224, when in a label editing mode.

In certain modes, a fixed length is defined. For example, in the fixed length mode, the user inputs the length of the label. The display in the fixed length mode is illustrated in Figure 14. The information area of the display 200 indicates that the mode is the fixed length mode and that a length of one inch has been selected. A differentiation is made on the second part of the display between those characters 234 which can be accommodated in the fixed length and those characters 236 which are outside the available print area corresponding with the defined label length. In particular, the characters which are outside the defined length are shown differently. This may be shown by a different coloured background, a reverse background, in a different font, by a flashing image or in any other way which permits the user to make a visual distinction between the characters which can be accommodated in the available print area and those that cannot. It is thus clear to the user that not all of the characters can be accommodated in the fixed length and additionally which of those characters which do not fit within that fixed length.

In this regard, reference is also made to Figure 4. The patch panel mode is another mode where the label areas enhance the total area of the label as a fixed length. The area 238 outside the label has a different appearance from the areas within the label 202, 204 and 206. A line 240 may be provided between the end of the label and the area 238 outside the label.

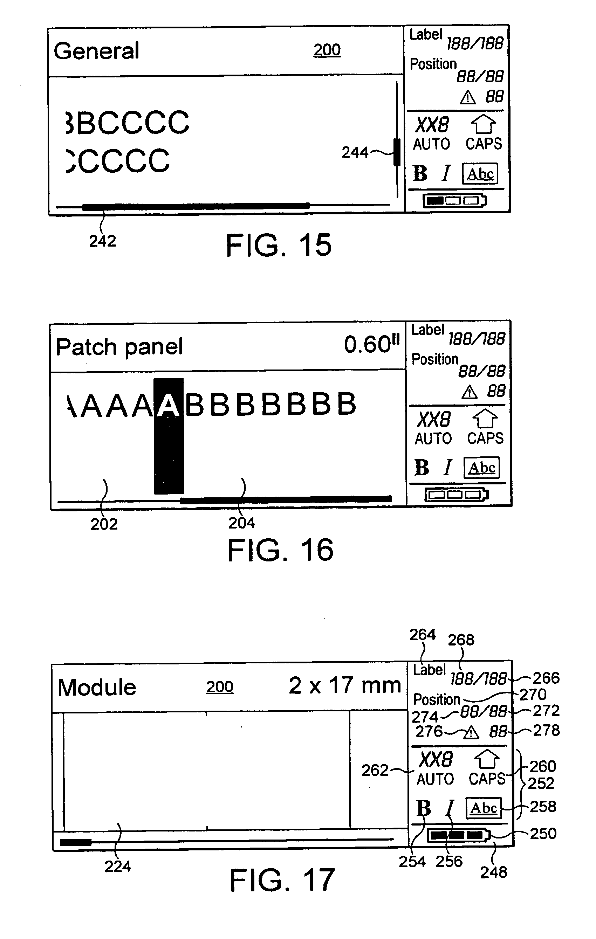

Reference is made to Figure 16. This shows two of the three patch panels 202 and 204. It should be noted that more characters than can be accommodated in the first area has been input. Accordingly, the character which cannot be accommodated in that first area is displayed on a different background, as in the embodiment of Figure 14.

The background may differ in any particular way. It should be appreciated that the line defining the end of the label, for example line 240 of Figure 4 will move along as the user inputs additional characters. The background only changes once the user inputs more characters than can be accommodated in the defined length.

Reference is made to Figure 15. The information area 200 indicates that the user is in the general input mode. The user has put in a label which is bigger than can be displayed in the display. Accordingly, scroll bars 242 and 244 are provided. Scroll bar 242 indicates which part of the label is displayed when considered from left to right i.e. generally corresponding to the length of the image receiving tape. Scroll bar 244 indicates which part of the label is displayed when considered from top to bottom. Generally this corresponds to the width direction of the image receiving tape. The user can move the cursor within the display image to change that part of the label which is displayed. As the part of the label which is displayed is changed, the position of the scroll bars from left to right and/or up to down will change.

As can be seen from some of the preceding figures, there is a third area of the display which can be seen very clearly from a consideration of Figure 17. Thus, in addition to the information area 200 and the second area 224 is a third so-called attribute area 248. This is part of the same display containing the other two areas but is dedicated to attribute information. This area provides the following information: there is a battery indicator 250 which indicates whether or not the battery is charged and if so by how much. In the case that the label printer contains a rechargeable battery, the battery indicator 250 might indicate that the battery is being recharged.

There is an area which provides label and font attributes. One indicator 254 indicates whether or not the font is bold or not. A second indicator 256 indicates whether italics has been selected or not.

A third indicator 258 indicates whether a frame has been selected and if the text is underlined. Indicator 260 indicates whether the capital lock key is on or off. Indicator 262 indicates the size of text. Various different sizes are set, the size of which is indicated. Alternatively, there is an autosizing mode in which the text size is automatically selected.

Indicator 264 is used for those modes where there are more than one label, for example serialisation mode, which will be described hereafter or where the user has input more than one label. The second position 266 will indicate the total number of labels. The first position 268 will indicate the position of the cursor i.e. the label in which the cursor is currently located. Accordingly, 2/3 will indicate that there are three labels and that the cursor is currently located in the second label.

A position indicator 270 is provided. This is provided for, for example the patch panel mode where there is a plurality of positions defined within a single label. The second number 272 indicates the number of positions whilst the first number 274 indicates the position of the cursor. Looking for example at the arrangement shown in Figure 4, the position is indicated as 2/3. This means that there are three areas (positions) in the label and that the cursor is in the second area, i.e. area 204.

Finally, the attribute area includes a warning indicator 276. When this is lit, this indicates that there is an error. For example, where there is a fixed length mode and the number of characters entered exceeds the fixed length, the warning indicator 276 will be lit. Adjacent to the warning indicator is a number 278. This is used to indicate the number of errors. Accordingly, if there are two errors, the number 2 will be displayed. By way of example, reference is made to Figure 14 where the warning indicator is lit and the number of errors is given as 1.

It should be appreciated that the information included in this attribute area is by way of example and any one or more of the attributes discussed hereinbefore can be omitted. In alternative embodiments of the present invention, alternative information may be included in this area in addition or as an alternative to some or all of the described information.

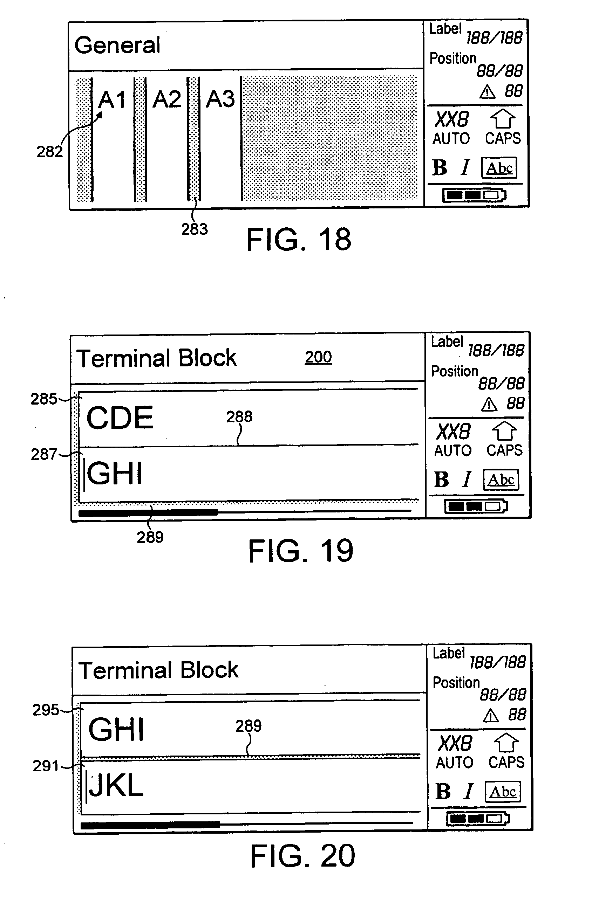

The user inputs a label comprising, for example, A1 referenced 282. The user wishes to serialise the label. The user presses the serialisation key 284. The user then has to input whether the character A or number 1 is to be serialised. Then the user needs to input the size of the incremental steps and finally the number of steps. In the embodiments illustrated in Figure 18, the steps size is 1 and the number of steps is 3. The tape printing apparatus is then arranged to automatically generate the three labels, A1, A2, and A3. As can be seen, the number 1, the selected character has been incremented by 1 in each of the three labels. It should be appreciated that if the user wishes, he can enter the serialisation mode again and serialise the first character, A in addition to the number.

Embodiments of the present invention may have three serialisation modes. The first serialisation mode is a simple serialisation mode where a single character is serialised. This is as described.

Simultaneous serialisation is similar to the simple serialisation described above but allows all the characters to be serialised simultaneously.

Finally, there is the advanced serialisation mode. In this mode, the user will have the ability to create serialisation which can involve two individual variables. After this selection is made, the counters for each variable need to be set. Then the characters in the edit buffer which need to be serialised will need to be selected

An example of advanced serialization will now be described:
aB1 is input.
The advanced serialization mode is selected in any suitable way.

The first character/number to be serialised is selected - in this example 1 is selected with step size =3 and number of steps =4.

The second character/number to be serialised is a with a step size of =5 and a number of steps as 2.

The result is an array of 4 labels as a result of the first selection aB1 aB4 aB7 aB10 followed by 4 labels as a result of the second selection fB1 fB4 fB7 fB10.

This is illustrated in the following table

| | | | |
|---|---|---|---|
| aB1 | aB4 | aB7 | aB10 |
| fB1 | fB4 | fB7 | fB10 |

If the number of serializations for the second selection is 3, there would be 12 results:

| | | | |
|---|---|---|---|
| aB1 | aB4 | aB7 | aB10 |
| fB1 | fB4 | fB7 | fB10 |
| kB1 | kB4 | kB7 | kB10 |

As will be seen, each of the created serialised labels can be displayed on the display. If more labels than can be displayed on the display are defined, the user can scroll through them using the cursor keys and the label indicator 264 informs the user where the cursor is positioned in the series of labels.

The selection of the characters to be serialised is simply done by moving the cursor control keys over the selected character. The confirmation key 218 is then activated. In one embodiment the cursor changes to a rectangle around a character when serialization is activated. This makes it easier for the user to select the desired character.

In those modes which have multiple labels, and indeed the normal mode, the leading and trailing margins before and after the image are not displayed so as maximise the characters which can be displayed in the display. In preferred embodiments, this is done for all modes. The display shows the start and end of the labels by areas in a certain color or pattern (e.g. area 238), and the effective input areas of the labels ignoring the non printed areas (corresponding to leading and trailing margins) of the labels. This provides the user with a maximum amount of information on a small display without the need of a WYSIWYG (what you see is what you get) display or a print preview option.

A size key 290 is provided on the keyboard which allows the character size to be selected. Every time the key is activated, the next size character is selected. Accordingly, to select a particular size of character requires the user to activate this key to cycle to the desired size. The currently selected character size will be displayed in the attribute area.

Every time the size key is activated and the next size is selected, the controller of the printer recalculates the data. For those modes which have a fixed length, the influence on the set character size on the label is displayed. For example, as the character size increases, it may well be that the input characters are no longer accommodated in the defined area of the label or in the label. This will be reflected in the display and the display will be for example as shown in Figure 14 or 16. Thus, the user is able to see how selecting the character size influences the labels.

It should be appreciated that in preferred embodiments of the present invention, the size of the actual character displayed does not change but rather the position of label boundaries or dividers with respect to the characters changes.

It should be appreciated that embodiments of the present invention are arranged such that the display 4 is controlled by the microprocessor to display the images shown in various of the figures in response to input from the user via the keyboard.

In preferred embodiments of the present invention, the different display areas are defined in a common display. In alternative embodiments of the invention, these areas may be defined by two or three separate areas.

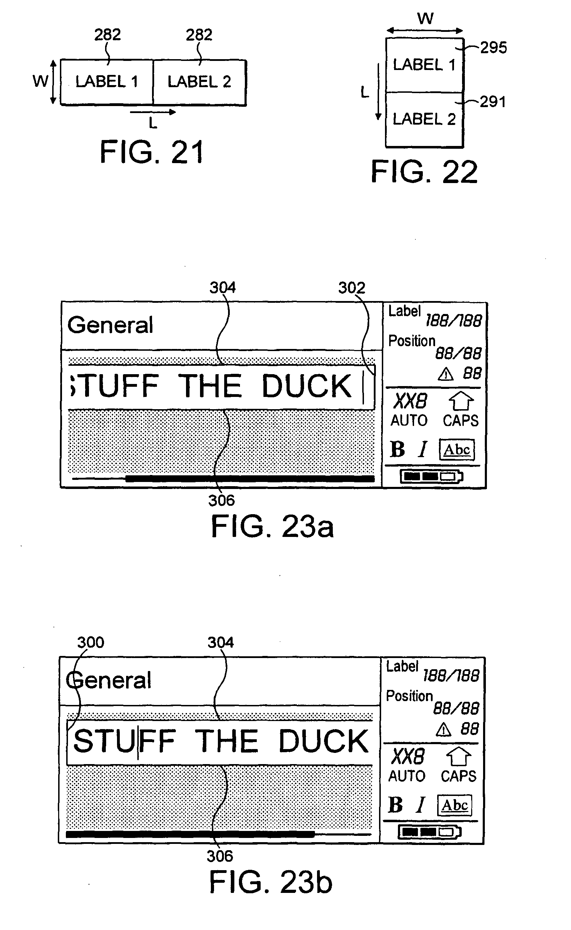

A further embodiment of the invention will now be described with reference to Figures 18 to 22. As is shown in Figure 18, there is a horizontal mode in which a plurality of labels is to be printed. In this mode, the labels are arranged horizontally. In other words, the consecutive labels when printed will extend along the length of the label one next to the other. The correct orientation of the labels is such that the text is readable in a direction parallel to the length of the label. Figure 21 illustrates a first label 282 and a second label 282. The length L of the tape is marked as is the width W. One label 282 is arranged adjacent to a second label 282 along the length of the tape.

Figure 18 shows the corresponding display. Each label 282 may be shown on the display as being separated by a divider 283. The divider 283 may take any suitable form which indicates that one label has ended and the next label has started.

Figure 19 shows the display which is shown when a vertical mode is entered. By vertical mode, it is understood that the text on the label will be oriented such as shown in Figure 22. Figure 22 will be described in more detail later. The correct orientation of the labels is such that the text is readable in a direction parallel to the width of the tape. In the arrangement shown in Figure 19, there are two labels, each having three parts, and the display shows parts of one label. The display shows two parts of the first label. Portions 285 and 287 of the display show two parts of the first label. These parts represent different blocks of the terminal block label. The parts are divided by a single line 288. In addition, a divider 289 may be provided to indicate the end of the label. This divider 289 may be in the form of a hatched line or any other suitable marking to indicate the end of the label. This divider 289 is preferably distinguished from the line 288 which separates the portions of the same label.

Figure 20 shows the display when two labels are provided in the vertical mode and the display displays parts of the two labels. The first label is referenced 295 and the second label is referenced 291.

It should be appreciated that Figure 19 may be regarded as being the second and third part of the first label to be printed, the third part of which is shown in Figure 20 as being part of the first label 295. In figure 19 the cursor is in the first label of two and on the third line of three s indicated on the right side of the display in respectively "Label 1/2" and "Position 3/3". In figure 20 the cursor is in the second label of two and on the first line of three as indicated on the display in respectively "Label 2/2" and "Position 1/3".

Reference is made to Figure 22 which shows the two labels 295 and 291 where the text extends parallel to the width of the label. In other words, to read the text of the label, it is necessary to change to the orientation of the tape as compared to that shown in Figure 21. To summarise, in the horizontal mode, the text is read in the correct orientation along the length of the label. In contrast, in Figure 22, the text is read in the correct orientation across the width of the tape. It should be appreciated in a further or alternative vertical mode, the text may be oriented as shown in Figure 22 but with one letter beneath the other. This can be displayed in accordance with the vertical mode illustrated in conjunction with Figures 19 and 20.

As can be seen by comparing Figures 18 to 20, when the label is in the horizontal mode, the divider dividing the labels is displayed in a vertical direction on the display. In other words, if the user was to move a cursor from one label to the next label, the user would use the left and right cursors. In the vertical mode, the divider dividing the two labels is shown in a horizontal direction of the display. In other words, for the user to move the cursor from one label to the next label in a vertical mode, the user would use the up and down cursor keys.

The display is such that the user is able to quickly and easily distinguish the operational mode based on the display. Furthermore, the user can easily see where one label stops and the next begins.

It should be appreciated that in the illustrated embodiment, the division between labels has been described as being a hatched line. However, it should be appreciated that this division can be shown by any other suitable way.

It should be appreciated that Figures 18 to 22 are particularly appropriate to the so-called terminal block mode for labelling adjacent electrical components. However, it should be appreciated that embodiments of the present invention are equally applicable to any other method of producing a series of so-called horizontal or vertical labels. It should be appreciated that the labels may be completely separated, partially separated or with no separation, when they are printed in output by the printer.

Reference is made to Figures 23a and b which shows a further embodiment of the invention. The display is controlled such that as a user is entering a label, the display will display at least one line of pixels representing a border of the label, in at least one of the width direction and the length. This has the advantage that when the user creates a label, the user will be able to see immediately if the displayed position is at a border of the label or not.

As can be seen from Figure 23a, the line of pixels 302 shown represents the end of the label while in Figure 23b the line of pixels 302 represents the beginning of the label. It should be appreciated that in some embodiments, if the label is relatively short both the end and beginning line of pixels will be shown. In some embodiments, depending on the length of label, it may be that neither of the beginning or end lines of pixels may be displayed. Thus is Figure 23a, the end of the label is being displayed whilst in Figure 23b, the beginning of the label is being displayed.

Also as shown in Figures 23a and b, there are also lines of pixels representing the top and bottom edges of the label. This is represented by lines 304 and 306. As can be seen, both the top and bottom edges are shown in the Figures. However, for a multi-line label, only one or even none of the bottom and top edges will be displayed, depending on the position of the label being displayed. The portion of the label being displayed may be determined by the position of the cursor.

Thus, in the length direction, when the label is longer than the part that can be displayed, the user will not be able to see the beginning of the label and the end of the label at the same time. In some cases he will even not be able to see any of them. With the feature of having a line of pixels at the beginning and a line of pixels at the end, the user will be able to have an idea where the cursor is positioned in the label when scrolling through the label. The user will know from this feature if the beginning and/or end of the label is on the display or not. The same also applies to the user being able to determine if the cursor is near the top or the bottom of the label.

It should be appreciated that the line of pixels can be replaced by any other suitable indication or marking. In some embodiments, the marking may be provided only at the beginning and ends of the label or only at the top and bottom of the label.

Embodiments of the present invention have been described in the context of an arrangement in which a cassette containing an ink ribbon and image receiving tape are used. It should be appreciated that alternative embodiments of the present invention may be used with a direct thermal material. This means that the need for the ink ribbon can be omitted. In a still further embodiment of the present invention, a two-cassette system may be used where the ink ribbon is accommodated in one cassette and the image receiving tape is accommodated in a different cassette.

In yet another alternative embodiment of the present invention, the image receiving tape may simply be provided on a roll without any cassette present.

Preferred embodiments of the present invention have been described in the context of a continuous image receiving tape. It should be appreciated that alternative embodiments of the present invention may be used with die cut labels, that is discrete labels which are adhered to a continuous backing layer.

Alternative embodiments of the present invention may use a further laminating tape which is used to protect the printed image. A number of different techniques are known for achieving lamination.

Embodiments of the present invention are preferably hand-held tape printing apparatus. However, alternative embodiments of the present invention may be arranged to be connected to a PC. Some embodiments of the present invention may be used both as a stand-alone printer and alternatively as a PC connected device.

One or more embodiments of the invention may be at least partially realised or be implemented by software. Accordingly embodiments can be at least partially implemented by one or more computer programs. The computer program may be provided on a computer program carrying medium or may be downloaded from a suitable source.

If the tape printing apparatus is to be used solely as a PC connected device, the keyboard may at least partially or completely be omitted. Likewise, the display may be at least partially or completely omitted.

Embodiments of the invention have been described in the context of label printing apparatus using thermal transfer by ink ribbon or direct thermal printing. It should be appreciated that embodiments of the invention are equally applicable to any other printing technology. By way of example only, such printing technologies may include ink jet printing and laser printing.

## Claims

1. A tape printing apparatus (2) comprising:
input means (6),
a display (4),
a processor (70) arranged to control said display (4) in response to an input received by said input means (6), said input means (6) being arranged to permit a user to define a label having a predetermined length dimension and a size of text for an image to be printed, said processor (70) being arranged to determine if the size of the image to be printed can be accommodated in said predetermined length dimension and to cause the display (4) to display a part of the image to be printed which cannot be accommodated in said predetermined length dimension in a different way to that part of the image which can be accommodated in said predetermined length dimension.

2. A tape printing apparatus (2) as set forth in claim 1, wherein said different way of displaying said part of the image that cannot be accommodated in said predetermined length dimension comprises at least one of a different coloured background, a reverse background, a different font or a flashing image.

3. A tape printing apparatus (2) as set forth in any preceding claim wherein said display (4) is configured to display said predetermined length dimension and that the tape printing apparatus is in a fixed length mode.

4. A tape printing apparatus (2) as claimed in any preceding claim, wherein when part of the image cannot be accommodated in said predetermined length dimension a user is provided with the option of continuing or cancelling printing.

5. A tape printing apparatus (2) as set forth in any preceding claim, said tape printing apparatus having a patch panel mode enabling the production of a patch panel label comprising a plurality of different areas (202, 204, 206) which can be individually labelled, and when in said patch panel mode an area (238) outside the patch panel label is displayed with a different appearance from areas within the label.

6. A tape printing apparatus (2) as set forth in claim 5 wherein a line is provided between an end of the label and the area outside the label.

7. A tape printing apparatus (2) as set forth in any preceding claim, in which a cursor is provided which a user can move within the display (4).

8. A tape printing apparatus (2) as set forth in any preceding claim in which the display (4) further comprises an area providing text information to assist a user to create a label, and a further area displaying attribute information.

9. A method of using a tape printing apparatus as set forth in any preceding claim comprising the steps of:
receiving an input defining a label having a predetermined length dimension and a size of text for an image to be printed;
determining if the size of the image to be printed can be accommodated in said predetermined length dimension; and
causing a display (4) to display a part of the image which cannot be accommodated in said predetermined length dimension in a different way to that part of the image which can be accommodated in said predetermined length dimension.

10. A method as claimed in claim 9 wherein said different way of displaying said part of the image that cannot be accommodated in said predetermined length dimension comprises at least one of a different coloured background, a reverse background, a different font or a flashing image.

11. A method as claimed in claim 9 or 10 comprising displaying in said display (4) said predetermined length dimension and that the tape printing apparatus is in a fixed length mode.

12. A method as claimed in any of claims 9 to 11 further comprising providing a user with the option of continuing or cancelling printing when part of the image cannot be accommodated in said predetermined length dimension.

13. A computer program or a computer program product carrying a computer program arranged when executed in a tape printing apparatus as set forth in any of claims 1 to 8 to perform the steps of any of claims 9 to 12.

## Patentansprüche

1. Ein Banddruckgerät (2), das Folgendes umfasst:
Eingabemittel (6),
eine Funktionsanzeige (4),
einen Prozessor (70), der angeordnet ist, um besagte Funktionsanzeige (4) in Reaktion auf eine vom besagten Eingabemittel (6) empfangene Eingabe zu steuern, wobei besagtes Eingabemittel (6) angeordnet ist, um einem Benutzer zu gestatten, ein Etikett mit einem vorbestimmten Längenmaß und einer Textgröße für eine zu druckende Abbildung zu definieren, und wobei besagter Prozessor (70) angeordnet ist um festzustellen, ob die Größe der zu druckenden Abbildung in das besagte vorbestimmte Längenmaß eingepasst werden kann, sowie um die Funktionsanzeige (4) zu veranlassen, den Teil der zu druckenden Abbildung, der nicht in das besagte vorbestimmte Längenmaß eingepasst werden kann, auf eine andere Weise als jenen Teil der Abbildung anzuzeigen, der in das besagte vorbestimmte Längenmaß eingepasst werden kann.

2. Ein Anspruch 1 entsprechendes Banddruckgerät (2), bei welchem die besagte andere Anzeigeweise des besagten Teils der Abbildung, der nicht in das besagte vorbestimmte Längenmaß eingepasst werden kann, zumindest jeweils einen andersfarbigen Hintergrund, einen inversen Hintergrund, eine andere Schriftart oder eine blinkende Darstellung aufweist.

3. Ein irgendeinem vorstehenden Anspruch entsprechendes Banddruckgerät (2), dessen besagte Funktionsanzeige (4) konfiguriert ist, um besagtes vorbestimmtes Längenmaß anzuzeigen, wobei sich das Banddruckgerät in einem Festlängenmodus befindet.

4. Ein irgendeinem vorstehenden Anspruch entsprechendes Banddruckgerät (2), das einem Benutzer die Möglichkeit bietet, das Drucken fortzusetzen oder abzubrechen, wenn Teil der Abbildung nicht in das besagte vorbestimmte Längenmaß eingepasst werden kann.

5. Ein irgendeinem vorstehenden Anspruch entsprechendes Banddruckgerät (2), das einen Patch-Panel-Modus hat, um die Produktion eines Patch-Panel-Etiketts zu ermöglichen, das eine Vielzahl verschiedener Bereiche (202, 204, 206) aufweist, die individuell beschriftet werden können, und wobei im besagten Patch-Panel-Modus ein außerhalb des Patch-Panel-Etiketts befindlicher Bereich (238) angezeigt wird, der eine andere Erscheinung hat als Bereiche innerhalb des Etiketts.

6. Ein Anspruch 5 entsprechendes Banddruckgerät (2), bei dem zwischen einem Ende des Etiketts und dem außerhalb des Etiketts befindlichen Bereich eine Linie angeordnet ist.

7. Ein irgendeinem vorstehenden Anspruch entsprechendes Banddruckgerät (2) mit einem Cursor, der von einem Benutzer innerhalb der Anzeige bewegt werden kann.

8. Ein irgendeinem vorstehenden Anspruch entsprechendes Banddruckgerät (2), bei welchem die Funktionsanzeige (4) ferner einen Bereich zur Angabe von Textinformationen, um einem Benutzer die Etiketterstellung zu erleichtern, sowie einen weiteren Bereich zur Anzeige von Attributinformationen umfasst.

9. Ein Verfahren zur Benutzung eines irgendeinem vorstehenden Anspruch entsprechenden Banddruckgeräts, das die folgenden Schritte umfasst:
das Empfangen einer Eingabe, die ein Etikett mit einem vorbestimmten Längenmaß und einer Textgröße für eine zu druckende Abbildung definiert;
das Feststellen, ob die Größe der zu druckenden Abbildung in das besagte vorbestimmte Längenmaß eingepasst werden kann; und
das Veranlassen einer Funktionsanzeige (4), den Teil der Abbildung, der nicht in das besagte vorbestimmte Längenmaß eingepasst werden kann, auf eine andere Weise anzuzeigen als als jenen Teil der Abbildung, der in das besagte vorbestimmte Längenmaß eingepasst werden kann.

10. Ein Anspruch 9 entsprechendes Verfahren, bei dem die besagte andere Anzeigeweise des besagten Teils der Abbildung, der nicht in das besagte vorbestimmte Längenmaß eingepasst werden kann, zumindest jeweils einen andersfarbigen Hintergrund, einen inversen Hintergrund, eine andere Schriftart oder eine blinkende Darstellung aufweist.

11. Ein Anspruch 9 oder 10 entsprechendes Verfahren, das das Anzeigen des besagten vorbestimmten Längenmaßes in besagter Funktionsanzeige (4) sowie den Festlängenmodus umfasst, in dem sich das Banddruckgeräts befindet.

12. Ein einem der Ansprüche von 9 bis 11 entsprechendes Verfahren, das ferner umfasst, einem Benutzer die Möglichkeit zu bieten, das Drucken fortzusetzen oder abzubrechen, wenn Teil der Abbildung nicht in das besagte vorbestimmte Längenmaß eingepasst werden kann.

13. Ein Computerprogramm oder ein mit einem Computerprogramm versehenes Computerprogrammprodukt, das bei Ausführung in einem jeglichen Ansprüchen von 1 bis 8 entsprechenden Banddruckgerät angeordnet ist, um die Schritte jeglicher Ansprüche von 9 bis 12 durchzuführen.

## Revendications

1. Un appareil d'impression sur bande (2) comprenant :
des moyens d'entrée (6)
un affichage (4)
un processeur (70) agencé pour commander ledit affichage (4) en réponse à une entrée reçue par lesdits moyens d'entrée (6), lesdits moyens d'entrée (6) étant agencés pour permettre à un utilisateur de définir une étiquette ayant une dimension de longueur prédéterminée et une taille de texte pour une image à imprimer, ledit processeur (70) étant agencé pour déterminer si la taille de l'image à imprimer peut être accommodée dans ladite dimension de longueur prédéterminée et pour amener l'affichage (4) à afficher une partie de l'image à imprimer qui ne peut pas être accommodée dans ladite dimension de longueur prédéterminée d'une façon différente que cette partie de l'image qui peut être accommodée dans ladite dimension de longueur prédéterminée.

2. Un appareil d'impression sur bande (2) selon la revendication 1, dans lequel ladite façon différente d'afficher ladite partie de l'image qui ne peut pas être accommodée dans ladite dimension de longueur prédéterminée comprend au moins un des suivants : un fond de couleur différente, un fond inversé, une police différente ou une image clignotante.

3. Un appareil d'impression sur bande (2) selon l'une quelconque des revendications précédentes dans lequel ledit affichage (4) est configuré pour afficher ladite dimension de longueur prédéterminée et que l'appareil d'impression sur bande est dans un mode de longueur fixe.

4. Un appareil d'impression sur bande (2) selon l'une quelconque des revendications précédentes dans lequel quand une partie de l'image ne peut pas être accommodée dans ladite dimension de longueur prédéterminée un utilisateur a l'option de continuer ou d'annuler l'impression.

5. Un appareil d'impression sur bande (2) selon l'une quelconque des revendications précédentes, ledit appareil d'impression sur bande ayant un mode de panneau de connexion permettant la production d'une étiquette de panneau de connexion comprenant une pluralité de zones différentes (202, 204, 206) qui peuvent être étiquetées individuellement, et quand dans ledit mode de panneau de connexion une zone (238) à l'extérieur de l'étiquette de panneau de connexion est affichée avec une apparence différente de celle des zones à l'intérieur de l'étiquette.

6. Un appareil d'impression sur bande (2) selon la revendication 5 dans lequel une ligne est prévue entre une extrémité de l'étiquette et la zone à l'extérieur de l'étiquette.

7. Un appareil d'impression sur bande (2) selon l'une quelconque des revendications précédentes dans lequel un curseur est fourni et un utilisateur peut le déplacer à l'intérieur de l'affichage (4).

8. Un appareil d'impression sur bande (2) selon l'une quelconque des revendications précédentes dans lequel l'affichage (4) comprend en outre une zone fournissant des informations textuelles pour aider un utilisateur à créer une étiquette, et une autre zone affichant des informations d'attribut.

9. Un procédé d'utilisation d'un appareil d'impression sur bande selon l'une quelconque des revendications précédentes comprenant les étapes de :
recevoir une entrée définissant une étiquette ayant une dimension de longueur prédéterminée et une taille de texte pour une image à imprimer ;
déterminer si la taille de l'image à imprimer peut être accommodée dans ladite dimension de longueur prédéterminée ; et
amener un affichage (4) à afficher une partie de l'image qui ne peut pas être accommodée dans ladite dimension de longueur prédéterminée d'une façon différente que cette partie de l'image qui peut être accommodée dans ladite dimension de longueur prédéterminée.

10. Un procédé selon la revendication 9 dans lequel ladite différente façon d'afficher ladite partie de l'image qui ne peut pas être accommodée dans ladite dimension de longueur prédéterminée comprend au moins un des suivants : un fond de couleur différente, un fond inversé, une police différente ou une image clignotante.

11. Un procédé selon les revendications 9 ou 10 comprenant l'affichage dans ledit affichage (4) de ladite dimension de longueur prédéterminée et que l'appareil d'impression sur bande est dans un mode de longueur fixe.

12. Un procédé selon l'une quelconque des revendications de 9 à 11 comprenant en outre de fournir à un utilisateur l'option de continuer ou d'annuler l'impression quand une partie de l'image ne peut pas être accommodée dans ladite dimension de longueur prédéterminée.

13. Un programme informatique ou un produit logiciel contenant un programme informatique agencé lors de son exécution dans un appareil d'impression sur bande selon l'une quelconque des revendications de 1 à 8 pour effectuer les étapes de l'une quelconque des revendications de 9 à 12.
